# EUROPEAN PATENT APPLICATION

(11) **EP 4 203 545 A1**
(43) Date of publication of application: **28.06.2023**
(21) Application number: 21858307.8
(22) Date of filing: 17.08.2021
(51) Int. Cl.: H04W 24/10, H04W 72/04

(54) **TERMINAL, WIRLESS COMMUNICATION METHOD, AND BASE STATION**

(30) Priority: 20.08.2020 JP 2020139269
(71) Applicant: NTT DOCOMO, INC., Chiyoda-Ku Tokyo 100-6150 (JP)
(72) Inventor: TAKAHASHI, Yuki, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2021/030053
(87) International publication number: WO 2022/039163

(57) **Abstract**

To appropriately control UL transmission even in a case where A-CSI using an uplink control channel is supported or a case where a cell for which a PUCCH is configured is dynamically configured/changed. A terminal according to one aspect of the present disclosure includes a receiving section that receives downlink control information to indicate triggering of channel state information using an uplink control channel, and a control section that controls, on the basis of the downlink control information, transmission of the channel state information, wherein transmission of the channel state information using the uplink control channel in a cell is supported, the cell being different from a cell in which the downlink control information is received.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "New Radio (NR)," "3GPP Rel. 15 (or later versions)," and so on) are also under study.

Existing systems (for example, Rel. 15 (or earlier versions)) supports a configuration in which a UE feedbacks a transmission confirmation signal (HARQ-ACK, ACK/NACK, or A/N) for DL data (for example, a PDSCH), thereby controlling retransmission of the PDSCH.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, 5G, NR, and the like), it is assumed that a plurality of traffic types (also referred to as services, types, service types, communication types, use cases, and so on) with different requirements, such as high speed and high capacity (for example, eMBB (enhanced Mobile Broad Band)), ultra-multiple terminals (for example, mMTC (massive Machine Type Communication) or IoT (Internet of Things)), and ultra-high reliability and low latency (for example, URLLC (Ultra Reliable and Low Latency Communications)), coexist.

In existing systems, reporting of aperiodic channel state information (for example, A-CSI) is controlled with use of an uplink shared channel (for example, a PUSCH). On the other hand, in Rel. 17 (or later versions), it is assumed that A-CSI reporting using an uplink control channel (for example, a PUCCH) is also supported. In Rel. 17 (or later versions), it is also assumed that a cell for which the PUCCH is configured is dynamically changed/updated.

However, how to control A-CSI transmission using the PUCCH has not been fully studied. Alternatively, how to control UL transmission in a case where a cell for which the PUCCH is configured is dynamically changed has not been fully studied.

Thus, an object of the present disclosure is to provide a terminal, a radio communication method, and a base station that can appropriately control UL transmission even in a case where A-CSI using an uplink control channel is supported or a case where a cell for which a PUCCH is configured is dynamically configured/changed.

### Solution to Problem

A terminal according to one aspect of the present disclosure includes a receiving section that receives downlink control information to indicate triggering of channel state information using an uplink control channel, and a control section that controls, on the basis of the downlink control information, transmission of the channel state information, wherein transmission of the channel state information using the uplink control channel in a cell is supported, the cell being different from a cell in which the downlink control information is received.

### Advantageous Effects of Invention

According to one aspect of the present disclosure, it is possible to appropriately control UL transmission even in a case where A-CSI using an uplink control channel is supported or a case where a cell for which a PUCCH is configured is dynamically configured/changed.

### Brief Description of Drawings

FIG. 1 is a diagram to show an example of cross-carrier scheduling in existing systems;
FIG. 2 is a diagram to show an example of cross-carrier scheduling configuration information in the existing systems;
FIG. 3 is a diagram to show an example of a configuration of a PUCCH in a cell group;
FIG. 4 is a diagram to show an example of UL transmission control in an aspect of the present embodiment;
FIG. 5 is a diagram to show another example of the UL transmission control in the aspect of the present embodiment;
FIG. 6 is a diagram to show another example of the UL transmission control in the aspect of the present embodiment;
FIG. 7 is a diagram to show an example of a schematic structure of a radio communication system according to one embodiment;
FIG. 8 is a diagram to show an example of a structure of a base station according to one embodiment;
FIG. 9 is a diagram to show an example of a structure of a user terminal according to one embodiment; and
FIG. 10 is a diagram to show an example of a hardware structure of the base station and the user terminal according to one embodiment.

### Description of Embodiments

### <Service (Traffic Type)>

In future radio communication systems (for example, NR), traffic types (also referred to as types, services, service types, communication types, use cases, and so on), such as further enhancement of mobile broadbands (for example, enhanced Mobile Broadband (eMBB)), machine type communication to achieve simultaneous multiple connections (for example, massive Machine Type Communications (mMTC) or Internet of Things (IoT)), high-reliability and low-latency communication (for example, Ultra-Reliable and Low-Latency Communications (URLLC)), are assumed. For example, URLLC demands shorter latency and higher reliability than those of eMBB.

In a physical layer, the traffic types may be identified on the basis of at least one of the following.
- Logical channels having different priorities
- Modulation and coding scheme (MCS) table (MCS index table)
- Channel quality indication (CQI) table
- DCI format
- (Radio network temporary identifier (RNTI (System Information-Radio Network Temporary Identifier)) used for scrambling (masking) of cyclic redundancy check (CRC) bits included (added) in the DCI (DCI format)
- RRC (Radio Resource Control) parameter
- Specific RNTI (for example, RNTI for URLLC, MCS-C-RNTI, or the like)
- Search space
- Certain field in DCI (for example, newly added field or reuse of existing field)

Specifically, the traffic types for HARQ-ACK (or PUCCH) in response to a PDSCH may be determined on the basis of at least one of the following.
- MCS index table used for determination of at least one of modulation order of the PDSCH, target code rate, and transport block size (TBS) (for example, whether MCS index table 3 is used)
- RNTI used for CRC scrambling of DCI used for scheduling of the PDSCH (for example, which of C-RNTI or MCS-C-RNTI performs CRC scrambling)
- Priority configured by higher layer signaling

The traffic types may be associated with communication requirements (requirements or required conditions, such as latency and an error rate), data types (such as voice and data), and the like.

Difference between requirements of URLLC and requirements of eMBB may be a case that latency of URLLC is shorter than that of eMBB, or may be a case that the requirements of URLLC include requirements of reliability.

For example, requirements of user (U) plane latency of eMBB may include a case that downlink U plane latency is 4 ms and uplink U plane latency is 4 ms. On the other hand, requirements of U plane latency of URLLC may include a case that downlink U plane latency is 0.5 ms and uplink U plane latency is 0.5 ms. Requirements of reliability of URLLC may include a case that a 32-byte error rate is 10⁻⁵ at 1 ms U plane latency.

As enhanced Ultra Reliable and Low Latency Communications (eURLLC), enhancement of reliability of traffics for unicast data is mainly under study. Hereinafter, when URLLC and eURLLC are not distinguished from each other, these are simply referred to as URLLC.

### (Cross-carrier Scheduling)

In existing systems (for example, Rel. 15 (or earlier versions)), cross-carrier scheduling (CCS) is supported for a UE for which a plurality of cells (or CCs) are configured. Cross-carrier scheduling represents an operation in which scheduling of a physical shared channel of another cell (for example, a secondary cell) is performed with use of a downlink control channel (for example, a PDCCH) of a primary cell or a specific secondary cell. The physical shared channel may be, for example, at least one of a downlink shared channel (for example, a PDSCH) and an uplink shared channel (for example, a PUSCH). The secondary cell may schedule another secondary cell.

A network (for example, a base station) may specify, by using a CIF (Carrier Indicator Field) with given bits (for example, 3 bits) included in DCI, a cell scheduled by the DCI for the UE for which cross-carrier scheduling is configured. On the basis of the CIF included in received DCI (or PDCCH), the UE controls transmission or reception of a physical shared channel scheduled by the DCI (or judges a cell in which the physical shared channel is scheduled by the DCI) .

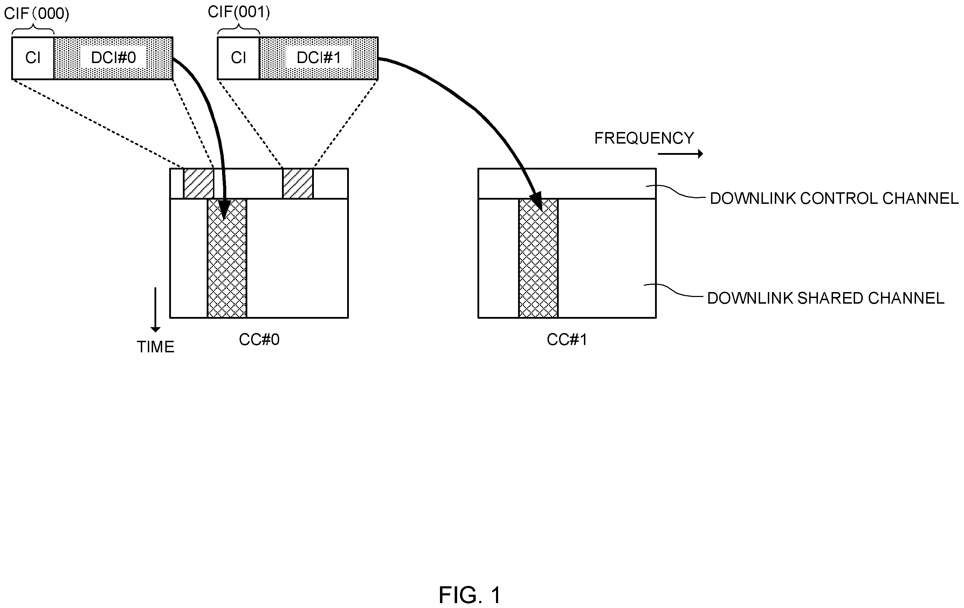

FIG. 1 is a diagram to show an example of a case where cross-carrier scheduling is applied. In FIG. 1, downlink control information (DCI #1) to indicate allocation of at least one of a PDSCH and a PUSCH (also described hereinafter as a PDSCH/PUSCH) transmitted on CC #1 (for example, in the secondary cell) is transmitted on a PDCCH of another CC #0 (for example, in the primary cell). On this occasion, a DCI configuration with an added carrier indicator (CI) is employed in order to identify which CC (CC 0 or CC 1) the DCI transmitted on the PDCCH of CC #0 schedules a PDSCH/PUSCH for.

In existing systems, when cross-carrier scheduling is applied, a 3-bit carrier indicator field (CIF) is configured for DCI, and a CC (or cell) scheduled by the DCI is notified to the UE. The UE performs, on the basis of the CIF included in the DCI, PDSCH reception processing or PUSCH transmission processing in a given CC.

Assume a case where cross-carrier scheduling is configured or applied for a given cell (or CC). In such a case, information indicates that cross-carrier scheduling is configured or applied for the cell and information related to from which cell scheduling is applied may be notified to the UE. Such information related to whether cross-carrier scheduling is applied and information related to a scheduling cell cell (to transmit a CIF, for example) may be notified, as higher layer signaling (for example, CrossCarrierSchedulingConfig) for a cell to be scheduled (for example, a scheduled cell), from the base station to the UE.

Here, a cell to control allocation of a PDSCH/PUSCH of another cell (CC) (or transmit DCI including the CIF) may be referred to as a scheduling cell or a cell to schedule. A cell for which cross-carrier scheduling is configured (for example, a cell scheduled on the basis of the CIF) may be referred to as a scheduled cell or a cell to be scheduled.

In cross-carrier scheduling, a primary cell (for example, a PCell) may always be scheduled (for example, self-scheduled) by a PDCCH of the primary cell. When a PDCCH is configured for a secondary cell (for example, an SCell), a PDSCH/PUSCH of the secondary cell may always be scheduled (for example, self-scheduled) by the PDCCH of the secondary cell. When the PDCCH is not configured for the secondary cell, the PDSCH/PUSCH of the secondary cell may always be scheduled by a PDCCH of another serving cell. The same numerology (for example, subcarrier spacing) may be applied to a PDCCH to perform scheduling and a PDSCH/PUSCH to be scheduled.

Cross-carrier scheduling shown in FIG. 1 shows a case where the scheduling cell corresponds to Cell #0 (CC #0), and the scheduled cell corresponds to Cell #1 (corresponding to CIF = 1).

The UE judges the scheduled cell on the basis of an index (for example, ServeCellIndex) corresponding to a 3-bit CIF value included in a PDCCH (or DCI) transmitted by the scheduling cell. When allocation of a PDSCH/PUSCH of the scheduling cell (self-scheduling) is performed, DCI including a CIF with a specific bit value (for example, CIF = 0) may be transmitted.

Correspondence between CIF values and ServeCellIndex values may be configured by higher layer signaling or the like. In this case, CIF may be configured for a PDCCH (or DCI) of the scheduling cell, and information related to correspondence of an index (for example, ServeCellIndex) of the scheduled cell (CC) to which each CIF value corresponds may be transmitted by higher layer signaling as well.

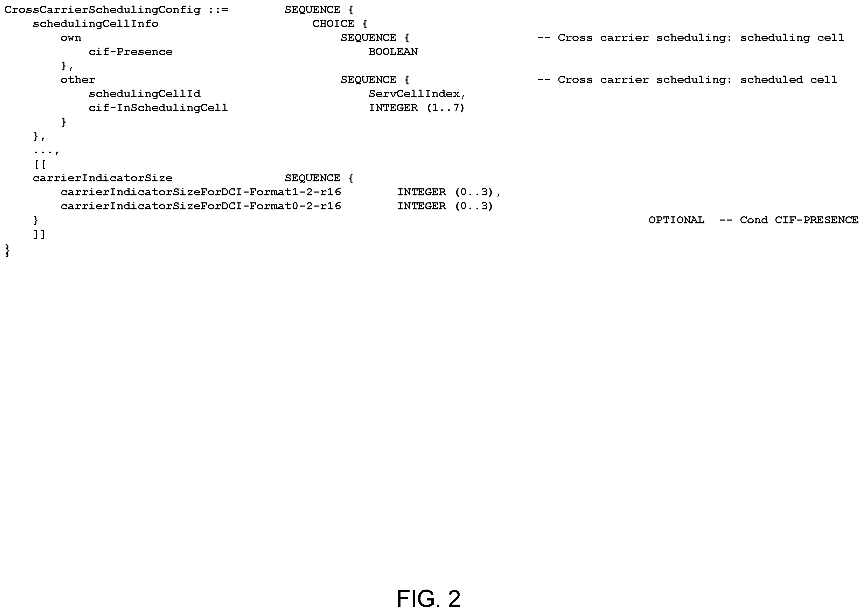

FIG. 2 is a diagram to show an example of cross-carrier scheduling configuration information. Note that the name of an IE shown in FIG. 2 is just an example, and is not limited to that illustrated. As shown in FIG. 2, the cross-carrier scheduling configuration information (CrossCarrierSchedulingConfig) may include either information (own) related to scheduling of its own cell or information (other) related to scheduling by another cell (cross-carrier scheduling).

As the information (own) related to scheduling of its own cell, information (cif-Presence) indicating the presence or absence of the CIF may be included. When cif-Presence is true, a CIF value of the cell (scheduling cell) may be configured to 0. When a CIF value of DCI transmitted by the scheduling cell is 0, the UE may judge that self-carrier scheduling is applied. When cif-Presence is true, a CIF included in a given DCI field (for example, DCI field 0_1/1_1) may be configured to given bits (for example, 3 bits).

On the other hand, a bit size of a CIF included in another DCI field (for example, DCI field 0_2/1_2) may be configured by a higher layer parameter (for example, carrierIndicatorSizeForDCI-Format1-2-r16 or carrierIndicatorSizeForDCI-Format0-2-r16). FIG. 2 shows a case where the bit size is configured in a range from 0 to 3.

As the information (other) related to scheduling by another cell, a cell indicator (cell index, scheduling cell ID, schedulingCellId) to signal DCI may be included. For example, with use of schedulingCellId, which cell signals DL assignment and a UL grant is indicated for the UE. A value of a CIF value (cif-InSchedulingCell) of the cell (scheduled cell) used in the scheduling cell may be included in other.

When decoding a PDCCH (or DCI) of a common search space (CSS), the UE may perform the decoding by assuming the absence of the CIF. In other words, when the CIF is configured, the UE may decode a control channel with the configured CIF in a UE-specific search space (USS), and may decode a control channel without the configured CIF in the common search space.

### (CSI Report (CSI report or reporting))

In Rel. 15 NR, a terminal (also referred to as a user terminal, User Equipment (UE), and so on) generates (also referred to as determines, calculates, estimates, measures, and so on) channel state information (CSI) on the basis of a reference signal (RS) (or resource for the RS), and transmits (also referred to as reports, feedbacks, and so on) the generated CSI to a network (for example, a base station). The CSI may be transmitted to the base station with use of, for example, an uplink control channel (for example, a Physical Uplink Control Channel (PUCCH)) or an uplink shared channel (for example, a Physical Uplink Shared Channel (PUSCH)).

It is only necessary that the RS used for generation of the CSI is, for example, at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like.

The CSI-RS may include at least one of a non-zero power (NZP) CSI-RS and CSI-Interference Management (CSI-IM). The SS/PBCH block is a block including an SS and PBCH (and corresponding DMRS), and may be referred to as an SS block (SSB) and so on. The SS may include at least one of a primary synchronization signal (PSS) and a secondary synchronization signal (SSS).

The CSI may include at least one parameter (CSI parameter) such as a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal-to-Noise and Interference Ratio or Signal to Interference plus Noise Ratio), an L1-SNR (Signal to Noise Ratio), and the like.

As a method for reporting the CSI, (1) periodic CSI (P-CSI) reporting, (2) aperiodic CSI (A-CSI) reporting, (3) semi-persistent (semi-permanent) CSI (SP-CSI) reporting, and the like are under study.

The UE may receive information related to CSI reporting (report configuration information), and may control the CSI reporting on the basis of the report configuration information. The report configuration information may be, for example, a radio resource control (RRC) information element (IE) "CSI-ReportConfig." Note that in the present disclosure, the RRC IE may be expressed in other words with an RRC parameter, a higher layer parameter, and the like.

The report configuration information (for example, the RRC IE "CSI-ReportConfig") may include, for example, at least one of the following.
- Information related to CSI report type (report type information, for example, RRC IE "reportConfigType")
- Information related to one or more quantities of CSI to be reported (one or more CSI parameters) (report quantity information, for example, RRC IE "reportQuantity")
- Information related to RS resource used for generation of the quantities (the CSI parameters) (resource information, for example, RRC IE "CSI-ResourceConfigId")
- Information related to frequency domain as target for CSI reporting (frequency domain information, for example, RRC IE "reportFreqConfiguration")

For example, the report type information may indicate a periodic CSI (P-CSI) report, an aperiodic CSI (A-CSI) report, or a semi-permanent (semi-persistent) CSI report (SP-CSI) report.

The report quantity information may specify at least one combination of the above-described CSI parameters (for example, the CRI, RI, PMI, CQI, LI, L1-RSRP, and the like).

The resource information may be an ID of the RS resource. The RS resource may include, for example, a non-zero power CSI-RS resource or SSB and a CSI-IM resource (for example, a zero power CSI-RS resource).

The frequency domain information may indicate frequency granularity of the CSI reporting. The frequency granularity may include, for example, a wide band and a sub-band.

The UE performs channel estimation by using a received RS to estimate a channel matrix H. The UE feedbacks an index (PMI) determined on the basis of the estimated channel matrix.

The PMI may indicate a precoder matrix (also simply referred to as a precoder) considered by the UE to be appropriate for use in downlink (DL) transmission to the UE. Each value of the PMI may correspond to one precoder matrix. A set of PMI values may correspond to a set of different precoder matrixes referred to as a precoder codebook (also simply referred to as a codebook).

Also, CSI feedback for the above-mentioned traffic types (for example, URLLC, IoT, and the like) is under study. For example, in order to satisfy URLLC requirements, enhancement of CSI feedback (reporting) for selection of a more accurate modulation and coding scheme (MCS) is under study.

When CSI reporting for URLLC is based on a periodically transmitted P-CSI, it is conceivable that a short periodicity of reporting of the P-CSI is configured. On the other hand, configuring the short periodicity of the P-CSI causes UL overhead increase and UE power consumption. When URLLC traffic occurs sporadically, it is conceivable that unnecessary P-CSI reporting may increase.

Thus, it is conceivable that CSI feedback for URLLC is performed with use of an aperiodic A-CSI.

In existing systems, the A-CSI is delivered only on a PUSCH scheduled by a UL grant. Assuming a scenario with much DL requires many resources for DL transmission, and thus it is conceivable that it is difficult to frequently trigger the A-CSI using the PUSCH. When failing to obtain the CSI feedback, a base station needs to schedule DL URLLC transmission by using the most conservative resource allocation and MCS level. Therefore, efficiency in resource usage may decrease.

Thus, introduction/support of A-CSI using a PUCCH (A-CSI on PUCCH) is under study. Specifically, it is preferable that besides the A-CSI using the PUSCH (for example, A-CSI on PUSCH), the A-CSI using the PUCCH (A-CSI on PUCCH) is supported.

The A-CSI using the PUCCH (A-CSI on PUCCH) may be triggered from the base station. The triggering from the base station may be performed by downlink control information (DCI), and at least one of DCI corresponding to a DL grant and DCI corresponding to a UL grant may be applied to the DCI. The DCI corresponding to the DL grant may be at least one of DCI formats 1_0, 1_1, and 1_2. The DCI corresponding to the UL grant may be at least one of DCI formats 0_0, 0_1, and 0_2.

### <PUCCH Transmission in Cell Group>

In the existing systems, a cell group including one or more cells is configured, and the PUCCH is configured for a specific cell (for example, one cell) in the cell group. The specific cell may be referred to as a primary cell or a PUCCH SCell. In other words, a cell to transmit the PUCCH is configured for one cell for each cell group.

In the existing systems, when the PUCCH is configured (or a secondary cell group is configured) for the SCell, the base station semi-statically notifies/configures, for the UE, information related to the cell with the configured PUCCH (for example, the PUCCH SCell) by using higher layer signaling. In this case, an SCell to transmit the PUCCH is semi-statically configured in a cell group including the PUCCH SCell.

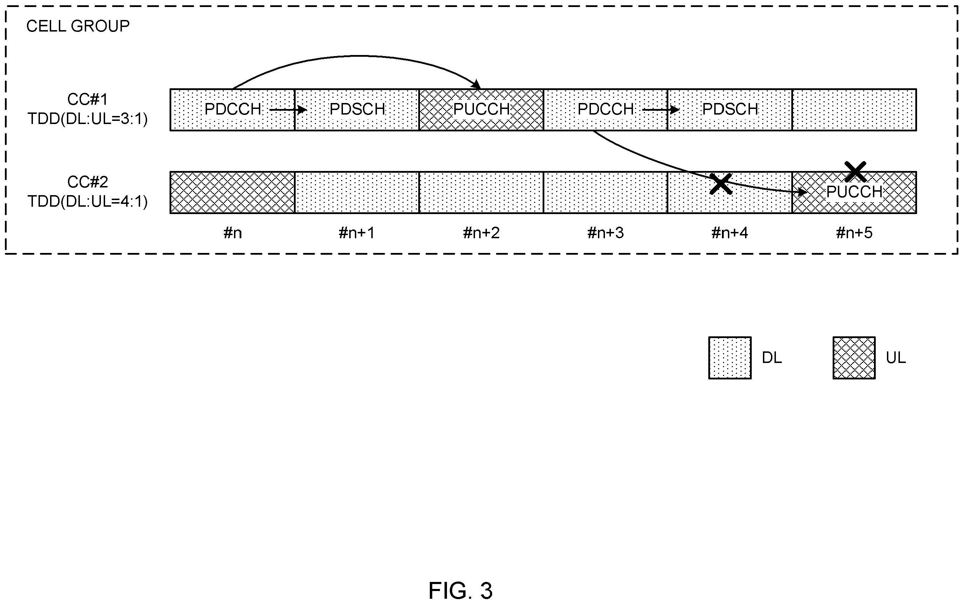

However, when the cell to transmit the PUCCH is semi-statically configured in the cell group, delay in PUCCH transmission (for example, PUCCH alignment delay) may occur. For example, as shown in FIG. 3, assume a case where the PUCCH is configured for CC #1 in a cell group including CC #1 and CC #2. FIG. 3 shows a case where a ratio of DL transmission to UL transmission is configured to 3:1 in CC #1 with application of TDD, and a ratio of DL transmission to UL transmission is configured to 4:1 in CC #2 with application of TDD.

In this case, HARQ-ACK in response to a PDSCH scheduled by a PDCCH transmitted in slot #n (DL) of CC #1 can be transmitted on a PUCCH in slot #n+2 (UL) of CC #1. On the other hand, transmission of HARQ-ACK in response to a PDSCH scheduled by a PDCCH transmitted in slot #n+3 (DL) of CC #1 fails in slot #n+5 (or specification of transmission of slot #n+5 fails), and it is necessary that a PUCCH of slot #n+6 (or later slots) is specified.

In FIG. 3, UL is configured in slot #n+5 of CC #2, but when the cell to transmit the PUCCH is semi-statically configured, it is difficult to configure the PUCCH (or perform transmission using the PUCCH) in slot #n+5 of CC #2.

On the other hand, when a CC used for PUCCH transmission can be dynamically selected (or specified, switched), delay in carrier aggregation operation (for example, PUCCH transmission) between 2 or more cells having different TDD patterns can be reduced. For example, in different CCs, the closest UL transmission occasion (slot #n+5 of CC #2 in FIG. 3) is used for PUCCH transmission, thereby allowing delay of UCI to be suppressed.

However, how to control UL transmission using the PUCCH in a case where a CC used for PUCCH transmission can be dynamically configured has not been fully studied. For example, as mentioned above, when A-CSI using the PUCCH is supported, how to control transmission of the A-CSI is an issue.

The inventors of the present invention studied how to control a CC (or cell) to perform A-CSI reporting using a PUCCH, and came up with the idea of the present embodiment.

Embodiments according to the present disclosure will be described in detail with reference to the drawings as follows. Respective aspects below may each be employed individually, or may be employed in combination. In the present disclosure, A/B may be interpreted as at least one of A and B, and A/B/C may be interpreted as at least one of A, B, and C.

In the present disclosure, a cell, a CC, a carrier, a BWP, and a band may be interchangeably interpreted. In the present disclosure, an index, an ID, an indicator, and a resource ID may be interchangeably interpreted. In the present disclosure, an RRC parameter, a higher layer parameter, an RRC information element (IE), and an RRC message may be interchangeably interpreted.

In description below, A-CSI reporting using a PUCCH will be described, but the present embodiment may be employed in another UL transmission (for example, another UCI transmission using the PUCCH and the like). For example, the present embodiment may be employed in P-CSI and SP-CSI using the PUCCH, or may be employed in another piece of UCI other than CSI.

### (Aspect of Embodiment)

In an aspect of the present embodiment, description will be given of UL transmission control in a case where a cell in which A-CSI reporting/transmission using a PUCCH (for example, A-CSI on PUCCH) is performed and a cell in which the A-CSI is triggered are configured separately.

Triggering of the A-CSI reporting/transmission using the PUCCH may be specified/notified by, for example, DCI. The DCI may include information (also described hereinafter as trigger information) related to triggering of the A-CSI using the PUCCH. A UE may control, on the basis of the trigger information included in the DCI, the A-CSI reporting/transmission using the PUCCH.

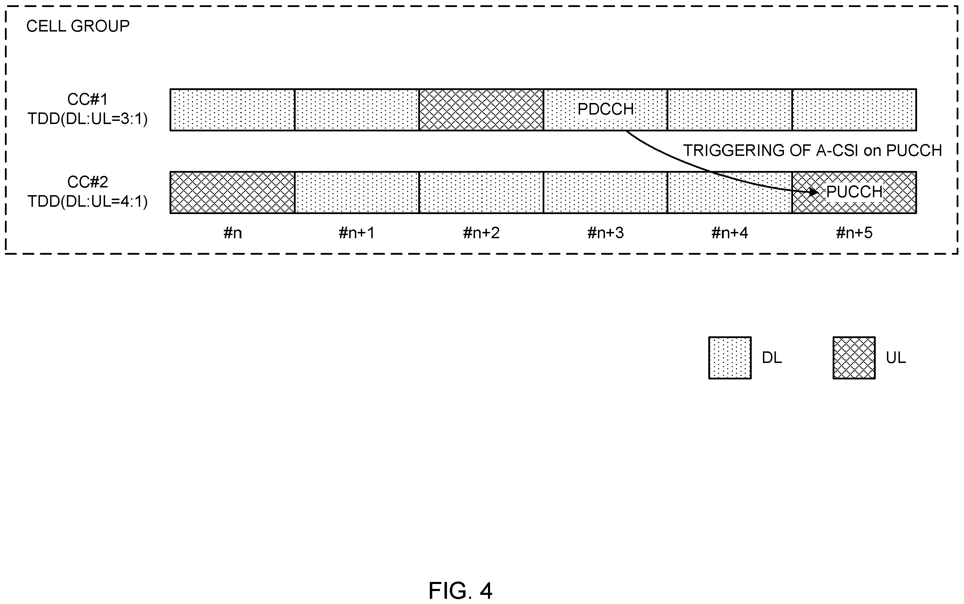

A cell in which the DCI including the trigger information is transmitted and a cell in which transmission of the A-CSI is performed on the basis of the trigger information may be controlled separately (for example, such that these cells are different cells). In other words, the UE may support transmission of the A-CSI using the PUCCH in a cell, the cell being different from a cell in which the DCI including the trigger information is received (see FIG. 4).

FIG. 4 shows a case where the A-CSI reporting/transmission is performed on the basis of the trigger information included in DCI (or PDCCH) transmitted in CC #1, with use of a PUCCH configured for another CC (here, CC #2). Therefore, A-CSI (for example, A-CSI on PUCCH) transmission can be performed in a cell, the cell being different from a cell in which triggering of the A-CSI is performed (or the DCI including the trigger information is transmitted). Consequently, PUCCH transmission can be controlled flexibly, and thus delay of A-CSI using a PUCCH can be reduced.

### <Notification of Cell in Which A-CSI on PUCCH Is Performed>

The UE may judge, on the basis of information notified from a base station, a cell in which A-CSI reporting/transmission using the PUCCH is performed. The information notified from the base station may be at least one of DCI and higher layer signaling. For example, the UE may determine the cell in which the A-CSI reporting/transmission using the PUCCH is performed by using at least one of option 1 and option 2 below.

Note that in the present description, the cell in which the A-CSI reporting/transmission using the PUCCH is performed may be interpreted as a cell for which the PUCCH is configured. In other words, the UE may judge, on the basis of DCI/higher layer signaling, a cell for which the PUCCH is configured, and may perform control so as to transmit the A-CSI by using the PUCCH in the cell.

### <Option 1>

The UE may judge, on the basis of a given field included in DCI, or given information, a cell in which the A-CSI reporting/transmission using the PUCCH is performed. The DCI may be DCI including trigger information about the A-CSI. For example, the DCI may be DL assignment (for example, DCI format 1_1 or DCI format 2_1), or may be a UL grant (for example, DCI format 0_1 or DCI format 0_2).

### [Alt. 1]

The UE may judge, on the basis of a carrier indicator field (CIF) used for cross-carrier scheduling, a cell in which the A-CSI reporting/transmission using the PUCCH is performed.

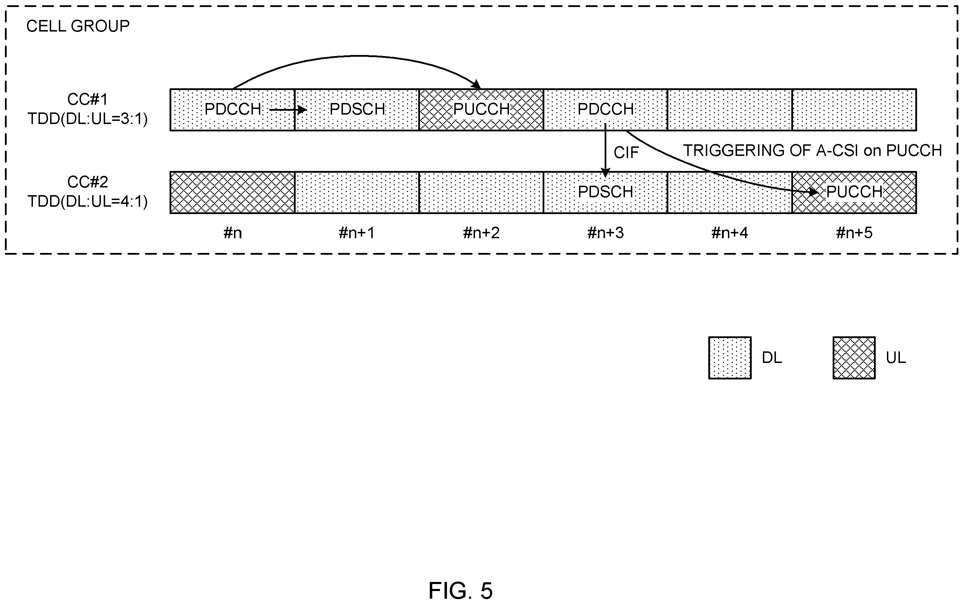

Assume a case where a PDSCH (or DL-SCH) is scheduled by the DCI including the trigger information, in other words, a case where triggering of the A-CSI using the PUCCH and scheduling of the PDSCH are performed together by the DCI (case 1). In such a case, in a given cell (for example, one cell) notified by the CIF, scheduling (or transmission) of the PDSCH and A-CSI reporting/transmission using the PUCCH are performed (see FIG. 5).

FIG. 5 shows a case where a CIF included in DCI (or PDCCH) transmitted in slot #n+3 of CC #1 specifies CC #2. The UE judges, on the basis of the CIF, a cell in which the PDSCH is scheduled (here, CC #2). The UE may control, on the basis of trigger information for A-CSI on PUCCH and the CIF included in the DCI, transmission of the A-CSI by using a PUCCH configured for CC #2 (here, slot #n+5) .

In other words, when cross-carrier scheduling is applied, a cell in which the PDSCH is scheduled (or transmitted) and a cell in which the A-CSI reporting/transmission using the PUCCH is performed may be configured such that these cells are the same. Note that when the UL grant is applied as the DCI, the PDSCH (or DL-SCH) may be interpreted as a PUSCH (or UL-SCH).

Assume a case where the PDSCH (or DL-SCH) is not scheduled by the DCI including the trigger information, in other words, a case where the A-CSI using the PUCCH is triggered by DCI, the DCI being configured not to perform scheduling of the PDSCH (or DL-SCH) (case 2). In such a case, in a given cell notified by the CIF, A-CSI reporting/transmission using the PUCCH is performed.

In this case, a bit configuration of a CIF for cross-carrier scheduling may be used for indication of a cell in which the A-CSI reporting/transmission is performed. The CIF may be used (or configured for the DCI) even when the PDSCH (or DL-SCH) to be scheduled is absent (or when cross-carrier scheduling is not applied).

At least one of configurations A to C below may be employed in CIF configuration (Carrier indicator field configuration).

### <<Configuration A>>

The CIF may always be present, and a bit size of the CIF may be fixed to a given value (for example, X bits). This case can eliminate the need for higher layer signaling to notify the presence or absence of the CIF in the DCI and the CIF size.

### <<Configuration B>>

A configuration mechanism for existing systems may be reused. For example, the presence or absence of the CIF and the bit size of the CIF may be configured/determined by a given higher layer parameter. The given higher layer parameter may be at least one of cif-Presence in CrossCarrierSchedulingConfig for DCI format 0_1/1_1 and carrierIndicatorSize in CrossCarrierSchedulingConfig for DCI format 0_2/1_2.

For example, with respect to DCI format 0_1/1_1, the bit size of the CIF may be a given value (for example, 3) if cif-Presence is true, otherwise the bit size of the CIF may be 0 bit. With respect to DCI format 0_2/1_2, the bit size may be selected from {0, ..., 3} by carrierIndicatorSizeForDCI-Format0-2-r16 and carrierIndicatorSizeForDCI-Format1-2-r16.

### <<Configuration C»

A new configuration mechanism may be employed. For example, the presence or absence of a CIF used for indication of a cell in which the A-CSI reporting/transmission is performed and the presence or absence of a CIF for cross-carrier scheduling may be configured separately. Specifically, a higher layer parameter (for example, cif-Presence-r17) used for notification/configuration of the presence or absence of the CIF used for indication of a cell in which the A-CSI reporting/transmission is performed may be provided separately from a higher layer parameter (for example, cif-Presence) used for notification/configuration of the presence or absence of the CIF for cross-carrier scheduling. cif-Presence-r17 and cif-Presence may be included in the same cross-carrier scheduling configuration (CrossCarrierSchedulingConfig).

Similarly, a bit size of the CIF used for indication of a cell in which the A-CSI reporting/transmission is performed and a bit size of the CIF for cross-carrier scheduling may be configured separately. Specifically, a higher layer parameter (for example, carrierIndicatorSizeForDCI-Format0-2-r17) used for notification/configuration of the bit size of the CIF used for indication of a cell in which the A-CSI reporting/transmission is performed may be provided separately from a higher layer parameter (for example, carrierIndicatorSize) used for notification/configuration of the bit size of the CIF for cross-carrier scheduling. carrierIndicatorSizeForDCI-Format0-2-r17 and carrierIndicatorSize may be included in the same cross-carrier scheduling configuration (CrossCarrierSchedulingConfig) .

When the presence or absence of both of the CIFs (for example, cif-Presence-r17 and cif-Presence) is configured, a CIF included in DCI may be applied for cross-carrier scheduling (for example, notification of a cell in which the PDSCH is scheduled) and for A-CSI using the PUCCH (for example, notification of a cell in which the A-CSI reporting/transmission is performed). When the presence or absence of either of the CIFs is configured, the CIF included in the DCI may be used for the configured intended use.

When the bit sizes of both of the CIFs (for example, carrierIndicatorSizeForDCI-Format0-2-r16 and carrierIndicatorSizeForDCI-Format0-2-r16) are configured, as a size of the CIF included in the DCI, a larger size out of the plurality of configured sizes may be applied. When either of the bit sizes is configured, as the size of the CIF included in the DCI, the configured size may be applied.

Thus, notification of a cell in which A-CSI reporting/transmission using a PUCCH is performed with use of DCI allows flexible control for a cell in which PUCCH transmission is performed, and thus delay of A-CSI using the PUCCH can be reduced. Notification of a cell in which A-CSI reporting/transmission using a PUCCH is performed with use of a field (for example, a CIF) included in DCI of existing systems allows to suppress an increase in DCI overhead.

### [Alt. 2]

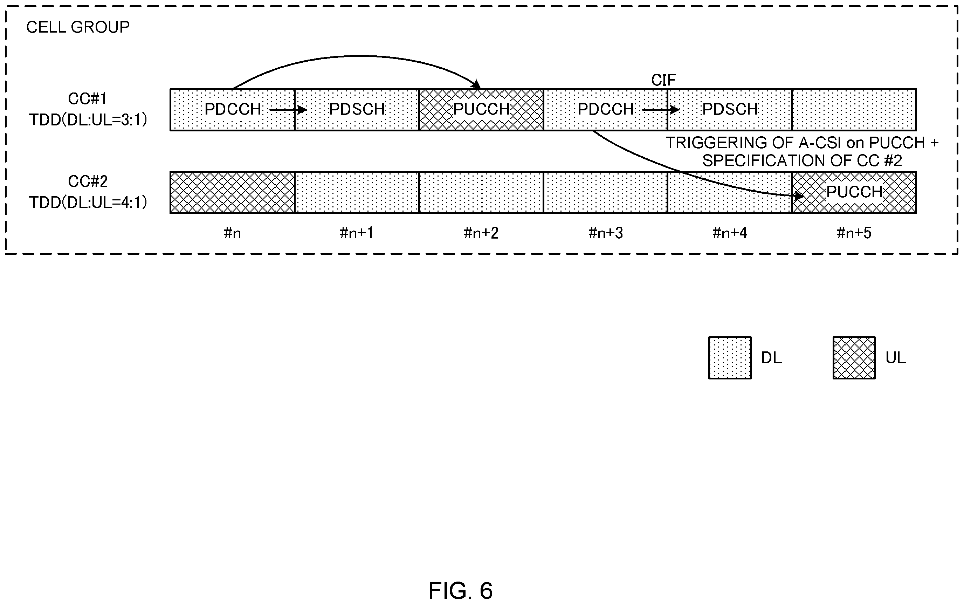

A field (for example, a new field) for notification of a cell in which A-CSI reporting/transmission using a PUCCH is performed may be configured for DCI separately from a CIF. The UE may judge, on the basis of a first field (for example, a CIF for cross-carrier scheduling), a cell in which a PDSCH is scheduled, and may judge, on the basis of a second field (for example, a new field), a cell in which the A-CSI reporting/transmission is performed (see FIG. 6) .

FIG. 6 shows a case where the CIF included in DCI (or PDCCH) transmitted in slot #n+3 of CC #1 specifies CC #1, and the new field specifies CC #2. The UE judges, on the basis of the CIF, a cell in which the PDSCH is scheduled (here, CC #1). The UE may control, on the basis of trigger information for A-CSI on PUCCH and the new field included in the DCI, transmission of the A-CSI by using a PUCCH configured for CC #2 (here, slot #n+5) .

Therefore, the cell in which the PDSCH is scheduled and the cell in which the PUCCH A-CSI reporting/transmission is performed can be configured separately.

The new field may be referred to as a new CIF, a CIF for A-CSI, a PUCCH indication field, a PUCCH cell indication field, a PUCCH configuration cell indication field, or a PUCCH configuration CC indication field.

At least one of above-mentioned configurations A to C in Alt. 1 may be employed in the new field (for example, new CIF configuration (Carrier indicator field configuration)).

The UE may judge, on the basis of a first higher layer parameter for cross-carrier scheduling, the presence or absence of the CIF configured for the DCI and its bit size, and may judge, on the basis of a second higher layer parameter for A-CSI (or for a PUCCH) using a PUCCH, the presence or absence of the new field configured for the DCI and its bit size. Therefore, a field for cross-carrier scheduling and a field for A-CSI using a PUCCH can be configured separately, the fields being configured for DCI.

### [Alt. 3]

The UE may judge, on the basis of another field different from the CIF included in the DCI, a cell in which the A-CSI reporting/transmission using the PUCCH is performed. Such another field may be at least one of a PUCCH resource identification field (for example, a PRI field) and a field (for example, a trigger field) to indicate triggering of A-CSI using a PUCCH.

For example, x bits may be added to the PRI field, and a cell in which A-CSI on PUCCH is performed may be specified with use of the PRI field (for example, x bits). For example, x may be 1, or may be 2 or more. The base station may notify the UE of the cell in which A-CSI on PUCCH is performed by using the least significant bit (LSB) or the most significant bit (MSB) of the PRI field. The number of least significant bits or most significant bits may be x bit (for example, 1 bit), or may be configured by higher layer signaling or the like.

PRI used for notification of a cell in which the A-CSI reporting/transmission is performed may be configured commonly to a PRI field for another piece of UCI (for example, HARQ-ACK/SR). Alternatively, PRI used for notification of a cell in which the A-CSI reporting/transmission is performed may be configured separately from a PRI field for another piece of UCI (for example, HARQ-ACK/SR).

For example, when transmission of HARQ-ACK and A-CSI in the same PUCCH resource is supported, the UE may control transmission of the HARQ-ACK and the A-CSI on the basis of a common PRI field. On the other hand, when transmission of HARQ-ACK and A-CSI in the same PUCCH resource is not supported (or when the HARQ-ACK and the A-CSI are transmitted in the same PUCCH resource), the UE may control transmission of each of the HARQ-ACK and the A-CSI on the basis of a different PRI field.

Alternatively, y bits may be added to a trigger field to indicate triggering of A-CSI on PUCCH, and a cell in which A-CSI on PUCCH is performed may be specified with use of the trigger field. For example, y may be 1, or may be 2 or more. The base station may notify the UE of the cell in which A-CSI on PUCCH is performed by using the trigger field. For example, the base station may notify the UE that triggering with use of a specific value (for example, 0) of the trigger field is not performed, and may notify the UE of triggering using another value and the cell in which A-CSI on PUCCH is performed.

### <Option 2>

The UE may judge, on the basis of higher layer signaling (for example, RRC signaling), a cell in which A-CSI reporting/transmission using a PUCCH is performed (or a cell in which the PUCCH is transmitted).

The UE may perform control so as to perform A-CSI on PUCCH in a cell notified/configured by the higher layer signaling. The cell in which A-CSI on PUCCH is performed may be changed/updated by RRC reconfiguration (for example, RRC reconfiguration).

### <Variations>

When cross-carrier scheduling is applied, A-CSI on PUCCH may be supported in a scheduled cell (or cell for which a PDCCH is not configured). In this case, the UE may support A-CSI on PUCCH in both a scheduling cell (or cell for which a PDCCH is configured) and the scheduled cell. The UE may report, to the base station, UE capability information (UE capability) related to whether to support A-CSI on PUCCH in the scheduled cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

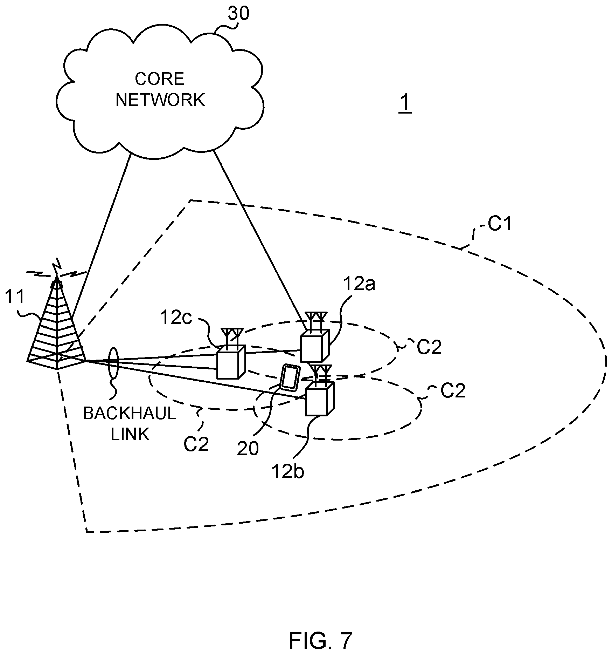

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

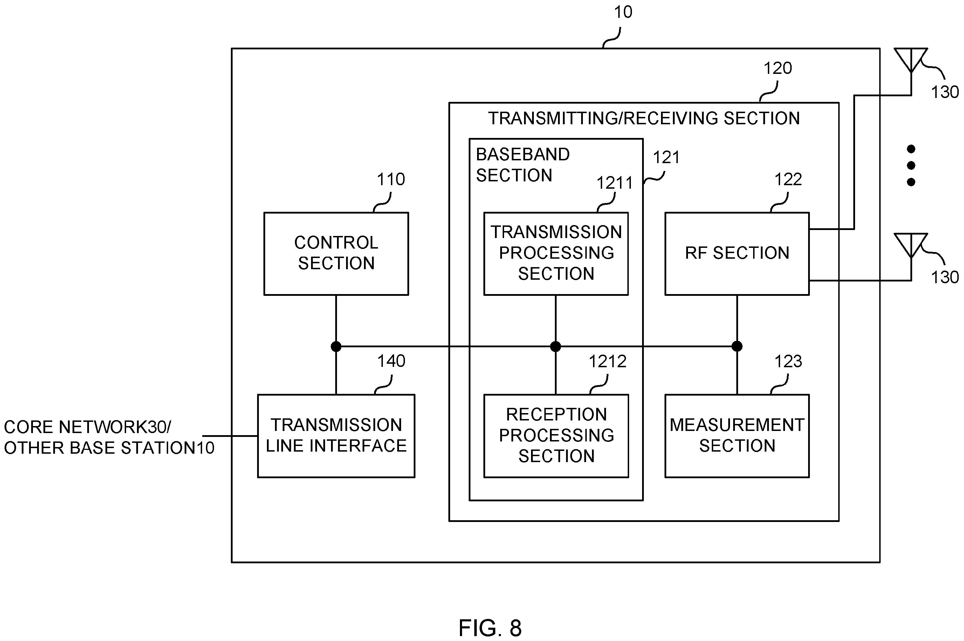

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit downlink control information to indicate triggering of channel state information using an uplink control channel.

The control section 110 may control reception of the channel state information transmitted on the basis of the downlink control information. The control section 110 may support reception of the channel state information using the uplink control channel in a cell, the cell being different from a cell in which the downlink control information is transmitted.

### (User Terminal)

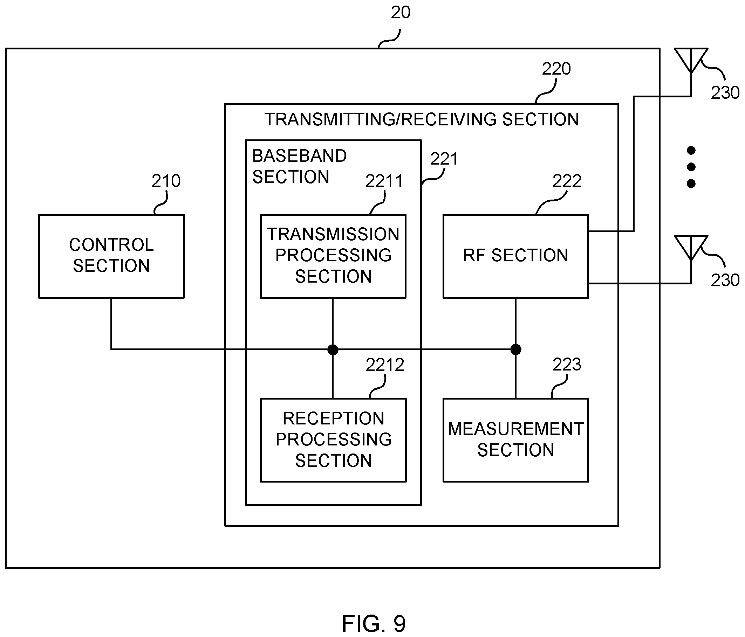

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information to indicate triggering of channel state information using an uplink control channel. The transmitting/receiving section 220 may transmit the channel state information on the basis of the downlink control information.

The control section 210 may control, on the basis of the downlink control information, transmission of the channel state information using the uplink control channel. The control section 210 may support transmission of the channel state information using the uplink control channel in a cell, the cell being different from a cell in which the downlink control information is received.

The control section 210 may judge, on the basis of at least one of the downlink control information and higher layer signaling, a cell in which the transmission of the channel state information using the uplink control channel is performed.

The control section 210 may judge, on the basis of a given field included in the downlink control information, a cell in which a downlink shared channel is scheduled and a cell in which the channel state information using the uplink control channel is transmitted.

The control section 210 may judge, on the basis of a first field included in the downlink control information, a cell in which a downlink shared channel is scheduled, and may judge, on the basis of a second field included in the downlink control information, a cell in which the channel state information using the uplink control channel is transmitted.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

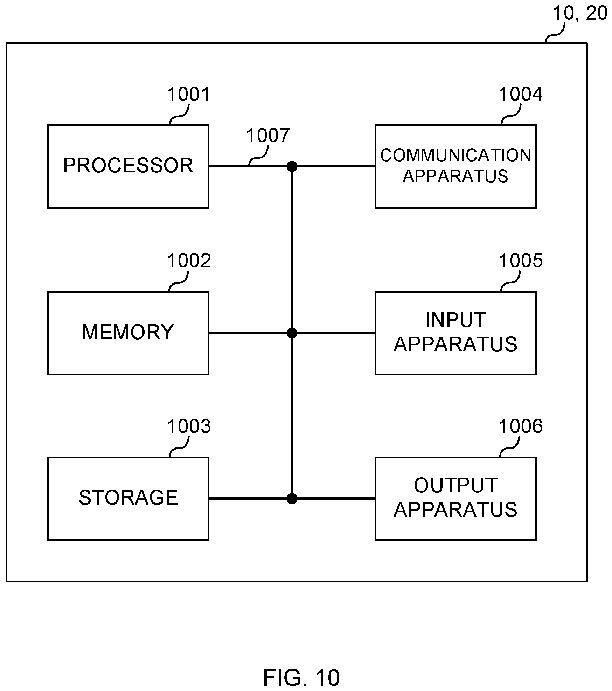

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs .

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2020-139269 filed on Aug. 20, 2020. The entire contents of the application are incorporated herein.

## Claims

1. A terminal comprising:
a receiving section that receives downlink control information to indicate triggering of channel state information using an uplink control channel; and
a control section that controls, on the basis of the downlink control information, transmission of the channel state information, wherein
transmission of the channel state information using the uplink control channel in a cell is supported, the cell being different from a cell in which the downlink control information is received.

2. The terminal according to claim 1, wherein
the control section judges, on the basis of at least one of the downlink control information and higher layer signaling, a cell in which the transmission of the channel state information using the uplink control channel is performed.

3. The terminal according to claim 1 or 2, wherein
the control section judges, on the basis of a given field included in the downlink control information, a cell in which a downlink shared channel is scheduled and a cell in which the channel state information using the uplink control channel is transmitted.

4. The terminal according to claim 1 or 2, wherein
the control section judges, on the basis of a first field included in the downlink control information, a cell in which a downlink shared channel is scheduled, and judges, on the basis of a second field included in the downlink control information, a cell in which the channel state information using the uplink control channel is transmitted.

5. A radio communication method for a terminal, the radio communication method comprising:
receiving downlink control information to indicate triggering of channel state information using an uplink control channel; and
controlling, on the basis of the downlink control information, transmission of the channel state information, wherein
transmission of the channel state information using the uplink control channel in a cell is supported, the cell being different from a cell in which the downlink control information is received.

6. A base station comprising:
a transmitting section that transmits downlink control information to indicate triggering of channel state information using an uplink control channel; and
a control section that controls reception of the channel state information transmitted on the basis of the downlink control information, wherein
reception of the channel state information using the uplink control channel in a cell is supported, the cell being different from a cell in which the downlink control information is transmitted.
